# EUROPÄISCHE PATENTSCHRIFT

(11) **EP 2 669 399 B1**
(45) Veröffentlichungstag und Bekanntmachung des Hinweises auf die Patenterteilung: **12.10.2016**
(21) Anmeldenummer: 12171373.9
(22) Anmeldetag: 08.06.2012
(51) Int. Cl.: C23C 4/08, C23C 4/12, C23C 24/04, F16C 33/12, C23C 30/00, C22C 9/00, C23C 28/02, B23K 35/30, C22C 1/02, C22C 9/02, F16C 9/04, F16C 33/14

(54) **Lagerteil, sowie thermisches Spritzverfahren**
Bearing and thermal spray method
Palier ainsi que procédé de pulvérisation thermique

(30) Priorität: 01.06.2012 EP 12170426
(43) Veröffentlichungstag der Anmeldung: 04.12.2013
(73) Patentinhaber: Oerlikon Metco AG, Wohlen, 5610 Wohlen (CH)
(72) Erfinder: Ernst, Peter Dr., 8174 Stadel b. Niederglatt (CH); Distler, Bernd, 5610 Wohlen (CH)
(74) Vertreter: Intellectual Property Services GmbH

(56) Entgegenhaltungen:
- EP-A1- 0 517 191
- EP-A1- 2 133 580
- EP-A2- 0 926 340
- DE-A1- 2 258 295
- DE-A1- 10 158 622
- GB-A- 2 285 290
- US-A1- 2003 049 148

## Beschreibung

Die Erfindung betrifft ein Lagerteil, sowie ein thermisches Spritzverfahren zum Herstellen eines Schichtsystems auf einem Lagerteil, insbesondere Pleuelauge eines Pleuel für eine Hubkolbenbrennkraftmaschine gemäss dem Oberbegriff der unabhängigen Ansprüche 1 und 6.

Die EP 926340 A2 beschreibt eine Taumelscheibe eines Kältemittelverdichters, die an einer Antriebswelle angeordnet ist zur gemeinsamen Rotation. Die Taumelscheibe weist eine vordere und eine hintere Oberfläche auf, die Gleitkontakt mit einem Paar von Schuhen haben. Über die Schuhe wird die Rotationsbewegung der Taumelscheibe in eine Hin- und Herbewegung eines Kolbens umgewandelt. Die vordere und hintere Oberfläche der Taumelscheibe sind beschichtet und weisen eine Deckschicht aus Zinn auf.

Die GB 2285290 A beschreibt ein Lagerteil eines Automatikgetriebes. Eine Oberfläche des Lagerteils weist ein Zinn enthaltenes Schichtsystem auf, wobei eine äussere Deckschicht bis auf Verunreinigungen nur aus Zinn besteht. Eine Cu-Sn-Zwischenschicht wird durch Diffusion erzeugt.

Die DE 10158622 A1 beschreibt das Aufbringen einer Zinn-Schicht auf ein Bauteil durch Beaufschlagung mit Zinn Partikeln mit hoher Geschwindigkeit knapp unter 1 Mach.

Die US 2003049148 A1 beschreibt das Aufbringen einer Schicht auf ein Bauteil durch Sintern. Diese Schicht enthält Zinn, Aluminium, und Kupfer, dient aber nicht als Zwischenschicht.

Lagervorrichtungen aller Art, z.B. Gleit- und Wälzlager nehmen in der Technik den überwiegenden Anteil von eingesetzten Lagern ein. Unter dem Begriff Lager bzw. Lagervorrichtungen sind im Folgenden alle, die Funktion des Lagers definierenden, z.B. aufeinander abrollenden, bzw. abgleitenden oder ineinander abgestützen Lagerteile zu verstehen, die in lagerndem Kontakt zusammenwirken.

Mit der an den in lagerndem Kontakt zusammenwirkenden Lagerlaufflächen entstehenden Reibung, sind in der Regel Verschleißerscheinungen verbunden, besonders an den Lagerlaufflächen. Gleitlager finden dabei in der Maschinentechnik in einer kaum übersehbaren Anzahl von Ausführungsformen Verwendung. Beispielweise werden in Hubkolbenbrennkraftmaschinen Gleitlager als Kurbelwellenlager, Pleuellager, Drucklager, Kreuzkopfzapfenlager, Propellerwellenlager oder in vielen anderen Anwendungen verwendet.

EP 2 133 580 offenbart eine hagerbeschrichtungsSystem aus Cu-Sn-Al-Ni Zwischenschicht und Sn-deckschicht.

Aus der WO 00/23718 ist beispielsweise ein Gleitlager sowie ein Verfahren zur Herstellung eines Gleitlagers offenbart, wobei eine aus Weißmetall bestehende Beschichtung an ein aus einem Eisenwerkstoff bestehendes Tragteil anlegiert wird. Die Bildung einer Legierung erfordert jedoch die Anwesenheit flüssiger Legierungskomponenten, so dass beim Beschichtungsvorgang dementsprechend viel Wärme freigesetzt wird, wodurch nicht nur das Weißmetall schmilzt, sondern auch an der laufflächenseitigen Oberseite des Tragteils ein aus geschmolzenem Grundwerkstoff bestehendes Metallbad erzeugt wird. Die so erzeugten Schmelzen von Weißmetall und Eisenwerkstoff können miteinander legieren, wobei in großem Umfang FeSn₂ entsteht. Hierbei entsteht dementsprechend eine vergleichsweise dicke Verbindungszone, die weitgehend aus FeSn₂ besteht. Diese Verbindungszone ergibt zwar eine gute metallurgische Verbindung zwischen dem Grundwerkstoff und der Beschichtung, jedoch stellt FeSn₂ ein sehr sprödes Material dar, so dass es bereits bei geringeren Belastungen der bekannten Lageranordnung zur Bildung von Rissen und zu Sprödbruch kommen kann. Hinzu kommt, dass im Falle einer ungünstigen Abkühlung eine Umwandlung des beschichtungsnahen Eisenwerkstoffs zu Martensit stattfinden kann, der ebenfalls sehr spröde ist, wodurch der vorstehend genannte Nachteil noch verstärkt wird.

Die Folge ist, dass sich bei einem Lager der zuvor beschriebenen Art infolge der hohen Sprödigkeit und geringen Streckfähigkeit innerhalb eines vergleichsweise dicken Zwischenbereichs zwischen dem Stahl des Grundwerkstoffs und der Weissmetall Lagerschicht eine entsprechend kurze Lebensdauer ergibt.

Um dies zu vermeiden ist es auch bekannt, eine aus Lagermetall wie Weißmetall bestehende Beschichtung im Schleudergußverfahren auf das Tragteil aufzubringen. Dabei unterbleibt zwar die Bildung eines aus geschmolzenem Grundwerkstoff bestehenden Metallbads. Bei der Erstarrung des im Schleudergussverfahren aufgebrachten Weißmetalls kann es jedoch zu einer Trennung der Legierungskomponenten kommen, indem zunächst aus Cu₆Sn₅ bestehende, nadelförmige Kristalle und dann aus SbSn bestehende kubische Kristalle ausfallen und schließlich die verbleibende zinnreiche Matrix erstarrt.

Die Dichte von Cu₆Sn₅ ist größer, diejenige von SbSn kleiner als die Dichte der länger flüssigen Matrix. Die Cu₆Sn₅ -Kristalle wandern dementsprechend radial nach außen und schwächen dabei den Bereich, mit dem die Weißmetall-Beschichtung an den Grundwerkstoff anschließt, was sich ebenfalls ungünstig auf die Lebensdauer auswirken kann.

Zur Vermeidung dieser und verwandter Probleme wird in der WO 2007/131 742 A1 ein Gleitlager und ein Verfahren zur Herstellung eines Gleitlagers vorgeschlagen, bei welchem zwischen der reinen Weissmetallschicht und dem eisenhaltigen Grundwerkstoff eine relativ dünne FeSn₂ enthaltende Verbindungszone ausgebildet wird, die höchstens 10µm dick ist.

Diese Lösung stellt jedoch lediglich einen Kompromiss dar, da die FeSn₂ Schicht zwar relativ dünn ist, aber eben immer noch vorhanden ist, so dass das Problem des Sprödbruchs und der Rissbildung immer noch nicht abschliessend gelöst ist. Insbesondere für Gleitlager, die enorm hohen Belastungen ausgesetzt sind, wie zum Beispiel Kurbelwellenlager von Verbrennungsmotoren, besteht das Problem des Sprödbruchs und der Rissbildung weiter fort, weil die Verformungsfähigkeit der Gleitlager gemäss WO 2007/131 742 A1 bei weitem noch nicht ausreichend ist.

Um diese Probleme grundsätzlich zu vermeiden und im Fall eines Verschleisses der Lagerflächen den Austausch des kompletten Lagers zu verhindern, werden unter anderem bei Gleitlagern auch Lagerschalen verwendet, die in das Lager eingesetzt und die die nach ihrer Abnutzung ausgetauscht werden können, d.h., es werden sogenannte geteilte Gleitlager mit Lagerschalen verwendet. Teilweise findet auch die kombinierte Lagerung in Gleit- und Wälzlagern Anwendung. Die Wellen sind dabei in der Regel aus geschmiedeten Stählen oder Gusseisen mit Kugelgraphit, die Gegenparte aus Vergütungsstählen geschmiedet, oder gesintert oder zum Teil auch aus Temperguss hergestellt. Die Lagerschalen sind meistens als sogenannte Zwei- oder Dreischichtlager realisiert.

Dadurch wird allerdings der konstruktive Aufbau des Gleitlagers wesentlich verkompliziert und mit dem Auswechseln der Lagerschalen wird außerdem ein kostenintensiver Wartungsprozeß nötig. Zudem ist die Herstellung solcher Lagerschalen relativ aufwendig. Bei hohen Laufleistungen der Maschine nutzen sich die Lagerschalen zudem vorzeitig soweit ab, daß das Wechseln der Lagerschalen nötig wird, wobei das Wechseln der Lagerschalen in solchen Maschinen, wie oben schon erwähnt wurde, mit hohen Kosten verbunden ist.

Aber auch bei anderen Arten von Lagern, z.B. bei Kugellagern ist der vorzeitige Verschleiss der Lagerteile, also zum Beispiel der Kugeln des Kugellagers, einer durch das Kugellager zu lagernde Achse, ein Käfig für die Kugeln des Kugellagers, oder anderer Lagerteile des Kugellagers ein prinzipielles Problem, das erheblichen Aufwand für Reparaturen und Wartung nach sich zieht und letztlich mit erheblichen Kosten verbunden ist.

Zur Lösung dieser und weiterer Probleme wurde daher in der EP 1 637 623 B1 ein Spritzpulver zur Herstellung einer Lagerschicht auf einem Lagerteil mittels eines thermischen Beschichtungsverfahrens vorgeschlagen, welches Spritzpulver bis zu 30% Zink, bis zu 10% Zinn, bis zu 3% Silizium, bis zu 7% Aluminium, bis zu 2% Eisen, bis zu 4%, bis zu 3% Kobalt enthält, wobei die zu 100% verbleibende Differenz Kupfer ist. Alle Angaben sind dabei Gewichts-Prozent.

Durch die EP 1 637 623 B1 wird somit ein Spritzpulver bereitgestellt, mit welchem mittels eines thermischen Beschichtungsverfahrens eine kupferhaltige Oberflächenschicht auf ein Lagerteil aufbringbar ist, so dass die Probleme mit den Weissmetallbeschichtungen, die zum Beispiel mittels Schleuderguss aufgebracht werden, ebenso vermieden werden, wie die Probleme mit den aufwändigen geteilten Lagern mit Lagerschalen.

Die entscheidenden Bestandteile des Spritzpulvers gemäss EP 1 637 623 B1 sind dabei einerseits Eisen Kobalt, Mangan und Silizium, die in der gespritzten Schicht beim Abkühlen in Form von einer Hartphase als intermetallische Phasen bzw. Verbindungen ausscheiden, so dass in der Schicht isolierte Bereiche entstehen, die räumlich isolierte Hartphasen aus intermetallischen Phasen bzw. intermetallischen Verbindungen aus Eisen Kobalt, Mangan und Silizium bilden. Die Hartphasen bilden relativ harte Bereiche, das heisst Bereiche mit hoher Härte, in der ansonsten verhältnismässig weichen kupferhaltigen Grundmatrix, die im wesentlichen aus Kupfer, Aluminium und Zink aufgebaut ist und so eine Kupfer-Aluminium Zink-Grundmatrix ausbilden, die im Verhältnis zu den eingeschlossenen Bereichen der Hartphasen, eine weiche kupferhaltige Grundmatrix bilden.

Obwohl die aus dem Spritzpulver gemäss EP 1 637 623 B1 gebildeten Lagerschichten im Betrieb hervorragende mechanische Eigenschaften bewiesen haben, hat sich allerdings leider gezeigt, dass zumindest für bestimmte Anwendungen der Zinkanteil dazu führen kann, dass Zinkabrieb in das die Lager schmierende Schmieröl gelangen kann, was sich unter Umständen, abhängig von der chemischen Zusammensetzung des verwendeten Schmieröls, zu einer Art von Zink-Vergiftung des Schmieröls führen kann, also dessen Eigenschaften negativ beeinflussen kann.

Ausserdem ist die Herstellung des Spritzpulvers gemäss EP 1 637 623 B1 aufgrund seiner relativ komplizierten chemischen Zusammensetzung einigermassen aufwändig und damit teuer.

Ein weiterer Nachteil der Lager gemäss EP 1 637 623 B1 besteht darin, dass je nach Anwendung und konkretem Lagertyp das Einlaufverhalten der Lagerschicht nicht optimal ist. Da die Beschichtung der EP 1 637 623 B1 ja gerade so ausgelegt ist, dass sie besonders beständig gegen mechanischen Verschleiss und damit langlebig ist, kann diese Beschichtung in der Regel nicht garantieren, dass zum Beispiel die Gegenparte eines mit dieser Beschichtung versehenen Lagers nach einer Einlaufzeit geometrisch bzw. in Bezug auf Reibung optimal aufeinander abgestimmt bzw. eingefahren sind, was normalerweise ein gutes Einlaufverhalten einer Lagerschicht kennzeichnet.

Die Aufgabe der Erfindung ist es daher, die Gleiteigenschaften einer Oberfläche eines Lagerteils durch Aufbringen einer thermischen Spritzschicht zu verbessern, und so eine verbesserte und konstruktiv einfachere Lagervorrichtung vorzuschlagen, die insbesondere auch die aus dem Stand der Technik bekannten Probleme mit dem Zinkabrieb vermeidet und zudem ein gutes Einlaufverhalten der Gegenparte des Lagers garantiert. Dementsprechend ist es eine weitere Aufgabe der Erfindung, ein chemisch möglichst einfach zusammengesetztes thermisch gespritztes Schichtsystem auf einem Lagerteil sowie ein entsprechendes thermisches Spritzverfahren bereitzustellen, mit welchem eine solche Lagerschicht auf einem Lagerteil herstellbar ist.

Die diese Aufgaben lösenden Gegenstände der Erfindung sind durch die Merkmale des unabhängigen Anspruchs der jeweiligen Kategorie gekennzeichnet.

Die abhängigen Ansprüche beziehen sich auf besonders vorteilhafte Ausführungsformen der Erfindung.

Die Erfindung betrifft somit ein Lagerteil nach Anspruch 1, insbesondere Pleuelauge eines Pleuel für eine Hubkolbenbrennkraftmaschine, wobei auf einer Oberfläche des Lagerteils ein mindestens Zinn enthaltendes Schichtsystem vorgesehen ist. Erfindungsgemäss besteht eine äussere, thermisch gespritzte Deckschicht des Schichtsystems bis auf Verunreinigungen nur aus Zinn.

In einem nicht mehr in den Schutzbereich der Ansprüche fallenden Beispiel ist die Deckschicht eine bis auf technisch unvermeidbare Verunreinigungen reine Zinnschicht, die direkt auf das Substratmaterial des Lagerteils thermisch aufgespritzt ist.

Es hat sich nämlich gezeigt, dass beim thermischen Spritzen von Zinn, beispielweise auf ein eisenhaltiges Substrat, die aus dem Stand der Technik bekannten schädlichen FeSn₂ Verbindungszonen im wesentlichen gar nicht entstehen. Der Grund dafür ist vermutlich, dass das thermisch gespritzte Zinn auf der Oberfläche des relativ kalten Substrats so schnell fest wird, dass ein Diffusionsvorgang zur Bildung der FeSn₂ im wesentlichen nicht stattfinden kann. Somit ist es durch die Erfindung erstmals möglich, die positiven Lagereigenschaften reiner Zinnschicht sogar auf eisenhaltigen Substraten zu realisieren, ohne die aus dem Stand der Technik bekannten Nachteile der FeSn₂ Diffusionsschichten in Kauf nehmen zu müssen.

Dabei hat die Zinn Deckschicht eine durch den thermischen Spritzvorgang bedingte hervorragende Anbindung, also Haftung auf dem Substrat, und zwar ohne Ausbildung einer Verbindungszone zwischen dem Grundwerkstoff und der Zinn Deckschicht, so dass die bekannten Probleme mit der spröden FeSn₂ Verbindungszone gar nicht entstehen, und es daher bei einem erfindungsgemässen Lagerteil, selbst wenn die reine Zinn Deckschicht direkt auf dem Lagerteil ohne Zwischenschicht thermisch gespritzt aufgetragen ist, es selbst bei hohen und andauernden Belastungen nicht zur Bildung von Rissen und oder zu Sprödbruch kommen kann.

Gleichzeitig hat das erfindergemässe Schichtsystem, im Gegensatz z.B. zu dem Cu-basierten Schichtsystems der EP 1 637 623 B1, die von Zinn haltigen Schichten, wie beispielsweise von Weissmetall bekannten hervorragenden Einlaufeigenschaften, so dass sich die in gegeneinander lagernden Teile eines erfindungsgemäss beschichteten Lagers optimal auf einander abstimmen und einschleifen können, wodurch die Leistungsfähigkeit, Verschleissfestigkeit und Lebensdauer erfindungsgemässer Lagerteile im Vergleich zum Stand der Technik drastisch verbessert bzw. erhöht ist.

Entsprechend der Erfindung ist zwischen der Oberfläche des Substrats und der Deckschicht eine Zwischenschicht nach Anspruch 1 vorgesehen, die zum Beispiel eine noch bessere Haftung der Zinn Deckschicht auf dem Substrat gewährleisten kann, oder gleichzeitig oder alternativ eine mangelnde Härte des Substratmaterials des Lagerteils kompensieren kann.

Die Zwischenschicht enthält kein Zink, so dass die aus dem Stand der Technik bekannten schädlichen Wirkungen von zinkhaltigen Beschichtungen vermieden werden.

Auch wenn ein erfindungsgemässes Schichtsystem immer eine Deckschicht aus, bis auf unvermeidbare Verunreinigungen, reinem Zinn umfasst, die natürlich im Prinzip eventuell unter der Deckschicht zusätzlich angeordnete Zwischenschichten abdeckt, kann es oft nicht vollständig ausgeschlossen werden, dass im Betriebszustand mit der Zeit Zinkabrieb aus zinkhaltigen Zwischenschichten entsteht, der zum Beispiel die aus dem Stand der Technik bekannte Zink-Vergiftung des Schmieröls verursachen kann. Daher enthält eine Zwischenschicht der vorliegenden Erfindung besonders bevorzugt kein Zink, auch wenn in bestimmten, sehr speziellen Ausführungsbeispielen ein Zinkanteil in der Zwischenschicht im Prinzip möglich ist.

Erfindungsgemäss ist die Zwischenschicht somit eine zinkfreie thermische Spritzschicht, die bis auf unvermeidbare Verunreinigungen die folgende Zusammensetzung aufweist: Zinn = 5% bis 30% Gewichts-Prozent, Aluminium = 0.1% bis 5% Gewichts-Prozent, Eisen höchstens 1% Gewichts-Prozent, und Kupfer = Differenz auf 100% Gewichts-Prozent.

Ein zweites wichtiges Merkmal einer erfindungsgemässen Zwischenschicht ist somit ein Zinngehalt von 5% bis 30% Gewichtsprozent in Verbindung mit einem relativ kleinen Anteil an Aluminium, der zwischen 0.1% bis höchstens 5% Gewichtsprozent liegt.

Wenn eine Zwischenschicht zwischen dem Substratmaterial des Lagerteils und der Deckschicht vorgesehen ist, ist es nicht immer aber häufig so, dass die Deckschicht aus Zinn wesentlich für die Bereitstellung guter Einlaufeigenschaften verantwortlich ist und dann eine reduzierte Dicke hat. Je nach dem wie der Einlaufvorgang konkret abläuft ist es dabei durchaus möglich, dass die Zinn Deckschicht zumindest an verschiedenen Stellen der Oberfläche sehr dünn wird oder an bestimmten Stellen gar vollständig durch den Einlaufvorgang abgetragen wird, so dass auch die chemischen und physikalischen Eigenschaften der Zwischenschicht für die Funktion des erfindungsgemässen Schichtsystems durchaus in jeder Hinsicht wesentlich werden, da die Zwischenschicht durch die Zinn Deckschicht dann nicht mehr vollständig abgedeckt ist.

Es ist dabei eigentlich im Prinzip bekannt, dass Aluminium einerseits einen starken positiven Einfluss auf die mechanischen Eigenschaften haben kann und insbesondere die Korrosionsbeständigkeit einer thermischen Spritzschicht bedeutend verbessern kann. Daher ist man im Stand der Technik bisher davon ausgegangen, dass ein relativ hoher Aluminiumgehalt notwendig ist um eine gute Korrosionsbeständigkeit der thermischen Spritzschicht garantieren zu können. Allerdings hat sich anderseits aber auch gezeigt, dass ein hoher Anteil von Aluminium im thermischen Spritzpulver beim thermischen Spritzen dazu führt, dass sich in erhöhtem Masse Aluminiumoxid (vorwiegend Al₂O₃) in der thermischen Spritzschicht ausbildet, was die Reibungseigenschaften der thermischen Spritzschicht wiederum negativ beeinflusst.

Eine weitere Erkenntnis der Erfindung besteht also darin, dass sich bei einem hohen Aluminiumgehalt in der Zwischenschicht eine Aluminiummatrix ausbilden kann, in der mehr oder weniger isolierte Zinnphasen verteilt sein können. Durch die relativ hohen Abkühlungs- und Verfestigungsraten beim thermischen Spritzen kann ein Teil des Zinns in einer gesättigten Lösung in der Aluminiummatrix ausgeschieden werden. Der Rest des Zinns ist dann in Form von Partikeln von unterkritischer Grösse, also in Form von Partikeln, die eine zu geringe Grösse haben in der Aluminiummatrix ausgebildet, so dass die sogenannten Anti-scuffing Eigenschaften der Schicht negativ beeinflusst werden, was bedeutet, dass die gegeneinander reibenden Gleitpartner, beispielweise die Gleitpartner eines Lagers, verstärkt zum Fressen (scuffing) neigen, was natürlich aus naheliegenden Gründen unbedingt verhindert werden muss.

Anderseits kann ein hoher Zinnanteil die Anti-scuffing Eigenschaften der thermischen Spritzschicht bedeutend verbessern, so dass durch eine Zwischenschicht der vorliegenden Erfindung letztlich eine thermische Spritzschicht ermöglicht wird, die alle wesentlichen Eigenschaften einer thermisch gespritzten Lagerschicht gleichzeitig optimiert. Dabei darf der Zinnanteil allerdings eine vorgebbare Grenze nicht überschreiten, da die thermische Spritzschicht sonst mechanisch zu schnell verschleisst. Die Funktion der Zwischenschicht ist nämlich nicht die Funktion einer Einlaufschicht. Diese Funktion wird bei einem erfindungsgemässen Schichtsystem, wenn benötigt, durch die Zinn Deckschicht wahrgenommen.

D.h., die erfindungsgemässe Kombination eines relativ niedrigen Aluminiumgehalts zwischen 0.1% und höchstens 5% Gewichtsprozent mit einem Zindgehalt von mindestens 5% bis maximal 30% Gewichtsprozent im thermischen Spritzpulver führt zu einer thermisch gespritzten Zwischenschicht von im wesentlichen gleicher Zusammensetzung, die erstmals sowohl die Anti-scuffing Eigenschaften der thermischen Spritzschicht, als auch die Korrosionsbeständigkeit, sowie die Reibeigenschaften, also einen möglichst kleinen Reibungskoeffizient der thermischen Spritzschicht gleichzeitig optimiert. Eine der wesentlichen Erkenntnisse der Erfindung ist dabei, dass in der Zusammensetzung des erfindungsgemässen Spritzpulvers bereits ein relativ kleiner Anteil von 0.1% bis 5% Gewichtsprozent an Aluminium ausreicht, um einerseits eine ausreichende Korrosionsbeständigkeit der thermischen Spritzschicht zu garantieren, wobei gleichzeitig die Ausbildung von unerwünschtem Aluminiumoxid (vorwiegend Al₂O₃) auf ein ausreichend niedriges Mass unterdrückt wird.

Dabei kann die Zwischenschicht bevorzugt zwischen 15% und 25% Gewichtsprozent Zinn, im speziellen ca. 20% Gewichtsprozent Zinn enthalten und / oder zwischen 0.5% und 2% Gewichtsprozent Aluminium, bevorzugt 1% Gewichtsprozent Aluminium enthalten und / oder die Zwischenschicht kann höchstens 0.5% Gewichtsprozent Eisen, bevorzugt höchstens 0.2% Gewichtsprozent Eisen enthalten.

Die Zwischenschicht kann dabei beispielweise eine Porosität von 0.5% bis 5% Volumen-Prozent, insbesondere zwischen 1% und 3% Volumen-Prozent aufweisen.

In der Praxis liegt dabei die Grösse der Partikel des verwendeten thermischen Spritzpulvers zwischen 5µm und 120µm, vorzugsweise zwischen 10µm und 60µm, und kann je nach Anwendung auch z.B. zwischen 60 µm und120 µm, wobei das verwendete Spritzpulver in an sich bekannter Weise beispielweise durch Gasverdüsen, Wasserverdüsen, Sintern, Sprühtrocknen, mechanisches Legieren, oder in einer an anderen geeigneten Weise hergestellt sein kann.

Schliesslich betrifft die Erfindung auch ein Spritzverfahren zum Herstellen eines Schichtsystems auf einem Lagerteil nach Anspruch 1 der vorliegenden Erfindung, wobei das Spritzverfahren ein thermisches Spritzverfahren, insbesondere ein atmosphärisches Plasmaspritzverfahren, ein Vakuumplasmaspritzverfahren, ein HVOF-Verfahren, ein Flammspritzverfahren oder ein Kaltgasspritzverfahren ist.

## Patentansprüche

1. Lagerteil, insbesondere Pleuelauge eines Pleuel für eine Hubkolbenbrennkraftmaschine, wobei auf einer Oberfläche des Lagerteils ein mindestens Zinn enthaltendes Schichtsystem vorgesehen ist, wobei eine äussere, thermisch gespritzte Deckschicht des Schichtsystems bis auf Verunreinigungen nur aus Zinn besteht und zwischen der Oberfläche des Substrats und der Deckschicht eine Zwischenschicht vorgesehen ist, **dadurch gekennzeichnet, dass**
die Zwischenschicht eine zinkfreie thermische Spritzschicht ist, die bis auf unvermeidbare Verunreinigungen die folgende Zusammensetzung aufweist:
Zinn = 5% bis 30% Gewichts-Prozent;
Aluminium = 0.1% bis 5% Gewichts-Prozent;
Eisen höchstens 1 % Gewichts-Prozent;
Kupfer = Differenz auf 100% Gewichts-Prozent.

2. Lagerteil nach Anspruch 1, wobei die Zwischenschicht zwischen 15% und 25% Gewichtsprozent Zinn, bevorzugt 20% Gewichtsprozent Zinn enthält.

3. Lagerteil nach einem der Ansprüche 1 oder 2, wobei die Zwischenschicht zwischen 0.5% und 2% Gewichtsprozent Aluminium, bevorzugt 1% Gewichtsprozent Aluminium enthält.

4. Lagerteil nach einem der Ansprüche 1 bis 3, wobei die Zwischenschicht höchstens 0.5% Gewichtsprozent Eisen, bevorzugt höchstens 0.2% Gewichtsprozent Eisen enthält.

5. Lagerteil nach einem der Ansprüche 1 bis 4, wobei die Zwischenschicht eine Porosität von 0.5% bis 5% Volumen-Prozent, insbesondere zwischen 1% und 3% Volumen-Prozent aufweist.

6. Spritzverfahren zum Herstellen eines Schichtsystems auf einem Lagerteil nach einem der Ansprüche 1 bis 5, wobei das Spritzverfahren ein thermisches Spritzverfahren, insbesondere ein atmosphärisches Plasmaspritzverfahren, ein Vakuumplasmaspritzverfahren, ein HVOF-Verfahren, ein Flammspritzverfahren oder ein Kaltgasspritzverfahren ist.

## Claims

1. A bearing part, in particular a connecting rod eye for a connecting rod for a reciprocating piston combustion engine, wherein a layer system containing at least tin is provided at a surface of the bearing part, wherein an outer, thermally sprayed top layer of the layer system is composed only of tin except for contaminants, and an intermediate layer is provided between the surface of the substrate and the top layer
**characterized in that**
the intermediate layer is a zinc-free thermal spray layer which has the following composition, except for unavoidable contaminants:
tin - 5% to 30% by weight;
aluminum = 0.1% to 5% by weight;
iron = at most 1% by weight;
copper = difference to 100% by weight.

2. A bearing part in accordance with claim 1, wherein the intermediate layer contains between 15% and 25% by weight tin, preferably 20% by weight tin.

3. A bearing part in accordance with one of the claims 1 or 2, wherein the intermediate layer contains between 0.5% and 2% by weight aluminium, preferably 1% by weight aluminium.

4. A bearing part in accordance with any one of the claims 1 to 3, wherein the intermediate layer contains at most 0.5% by weight iron, preferably at most 0.2% by weight iron.

5. A bearing part in accordance with any one of the claims 1 to 4, wherein the intermediate layer has a porosity of 0.5% to 5% by volume, in particular between 1% and 3% by volume.

6. A spray method for producing a layer system on a bearing part in accordance with any one of the claims 1 to 5, wherein the spray method is a thermal spray method, in particular an atmospheric plasma spray method, a vacuum plasma spray method, an HVOF method, a flame spray method or a cold gas spray method.

## Revendications

1. Partie de palier, en particulier pied de bielle d'une bielle pour un moteur alternatif à combustion interne, dans laquelle, sur une surface supérieure de la partie de palier, un système de couches contenant au moins de l'étain est prévu, dans laquelle une couche de revêtement externe par pulvérisation thermique du système de couches est constituée uniquement d'étain à l'exception d'impuretés, et une couche intermédiaire est prévue entre la surface supérieure du substrat et la couche de revêtement, **caractérisée en ce que**
la couche intermédiaire est une couche par pulvérisation thermique exempte de zinc ayant la composition suivante, à l'exception d'impuretés inévitables :
étain = 5 % à 30 % en poids ;
aluminium = 0,1 % à 5 % en poids ;
fer, un maximum de 1 % en poids :
cuivre = différence par rapport à 100 % en poids.

2. Partie de palier selon la revendication 1, dans laquelle la couche intermédiaire contient entre 15 % et 25 % en poids d'étain, de préférence 20 % en poids d'étain.

3. Partie de palier selon la revendication 1 ou 2, dans laquelle la couche intermédiaire contient entre 0,5 % et 2 % en poids d'aluminium, de préférence 1 % en poids d'aluminium.

4. Partie de palier selon l'une quelconque des revendications 1 à 3, dans laquelle la couche intermédiaire contient au plus 0,5 % en poids de fer, de préférence au plus 0,2 % en poids de fer.

5. Partie de palier selon l'une quelconque des revendications 1 à 4, dans lequel la couche intermédiaire a une porosité de 0,5 % à 5 % en volume, en particulier entre 1 % et 3 % en volume.

6. Procédé de pulvérisation pour la production d'un système de couches sur une partie de palier selon l'une quelconque des revendications 1 à 5, dans lequel le procédé de pulvérisation est un procédé de pulvérisation thermique, en particulier un procédé de pulvérisation à plasma atmosphérique, un procédé de pulvérisation à plasma sous vide, un procédé HVOF, un procédé de pulvérisation à la flamme ou un procédé de pulvérisation à gaz froid.
